Europäisches Patentamt

European Patent Office

Office européen des brevets

(19)

(11) Numéro de publication: **0 1 1 7 1 8 9**
**B1**

(12) **FASCICULE DE BREVET EUROPEEN**

(45) Date de publication du fascicule du brevet:
09.04.86

(21) Numéro de dépôt: 84400254.3

(22) Date de dépôt: 07.02.84

(51) Int. Cl.⁴: **A 23 J 1/00, C 12 N 9/88**

(54) **Procédé d'extraction des protéines foliaires à partir d'une matière végétale et plus particulièrement d'une plante genre Nicotiana.**

(30) Priorité: 08.02.83 FR 8302097

(43) Date de publication de la demande:
29.08.84 Bulletin 84/35

(45) Mention de la délivrance du brevet:
09.04.86 Bulletin 86/15

(84) Etats contractants désignés:
BE CH DE FR IT LI LU

(56) Documents cités:
FR - A - 2 506 325
IT - A - 531 003

(73) Titulaire: **SOCIETE NATIONALE D'EXPLOITATION INDUSTRIELLE DES TABACS ET ALLUMETTES, 53, quai d'Orsay, F-75340 Paris Cedex 07 (FR)**

(72) Inventeur: **Dumery, Bernard, Peymilou, F-24130 La Force (Dordogne) (FR)**

(74) Mandataire: **Bloch, Robert et al, 39 avenue de Friedland, F-75008 Paris (FR)**

## Description

La présente invention concerne un procédé d'extraction des protéines foliaires d'une matière végétale et plus particulièrement d'une plante genre Nicotiana. Selon un aspect de l'invention, elle a trait à un procédé d'extraction de la fraction 1 protéique hydrosoluble de la plante.

Différents procédés ont été publiés. Ils sont basés sur les observations très anciennes de H.M. ROUELLE qui, dès 1773, met en évidence, par pressurage et chauffage des jus, la presence de "matière glutineuses ou végéto-animales" dans les parties vertes des végétaux. La fraction 1 protéique a été identifiée pour la première fois en 1947.

Il est admis par l'homme de l'Art que les protéines foliaires peuvent être réparties en deux groupes principaux en fonction de leur solubilité dans l'eau

- les protéines membranaires, insolubles dans l'eau, liées en particulier aux pigments chlorophylliens, qui correspondent pour l'essentiel aux protéines vertes décrites dans les différents procédés d'extraction connus.
- les protéines hydrosolubles. Ces protéines appelées également protéines blanches après extraction, sont constituées pour moitié environ par la Ribulose 1-5 diphosphate carboxylase oxygénase (EC, 4.1.1.39) ou fraction 1 protéique, d'origine chloroplastique et pour moitié par la fraction il proteique, mélange des autres enzymes d'origine essentiellement cytoplasmique.

Ces protéines jusqu'à présent, malgré leur abondance dans le règne végétal et leur valeur nutritive pour l'homme et l'animal, n'ont pas fait l'objet d'une exploitation intensive car les procédés connus ne sont pas utilisables industriellement.

La protéine de la fraction 1 est celle qui potentiellement est la plus intéressante car à l'état pur elle est inodore, insipide et incolore. La plante de tabac, genre Nicotiana, est le seul végétal actuellement connu qui permet d'obtenir une quantité importante de ladite protéine sous forme cristallisée ou pré-cristallisée, donc très purs. De plus, elle est remarquablement équilibrée en acides aminés essentiels, ce qui permet d'envisager son utilisation dans certains régimes alimentaires pour malades souffrant de troubles du métabolismes (maladie rénale,....).

Les procédés connus pour isoler les protéines débutent par la réduction en pulpe des feuilles ou bien des feuilles et des tiges de la plante par broyage. Ce broyage est suivi d'un pressurage qui permet de séparer de la masse fibreuse le jus vert contenant une grande partie des protéines insolubles et des protéines solubles dans l'eau.

La séparation des protéines insolubles de ce jus se fait jusqu'à présent après avoir provoqué leur coagulation par chauffage du jus à 50°C + 2°C pendant 10 à 30 min suivi d'un refroidissement rapide à la température ambiante voisine de 20°C. Après cette étape, deux techniques courantes peuvent être mises en oeuvre.

La centrifugation ou la filtration sous vide. Cette dernière technique, qui requiert l'emploi d'additifs de filtration du type "perlite" pour atteindre son maximum d'efficacité, est parfaitement adpatée au traitement industriel.

Le jus clarifié de couleur brune, qui contient en mélange les fractions protéiques I et II est, de manière connue, traité suivant divers procédés abondamment décrits dans la littérature et plus particulièrement dans la demande de brevet français n ° 81 09 950 (FR-A 2 506 325). Il est evident pour l'homme de l'Art que ces procédés sont coûteux. Parfois longs, voire inefficaces, dans la mesure ou, si aucun additif n'est apporté au jus, la precipitation de la fraction 1 sera inexistante dans les cas où la plante utilisée sera en fin de période végétative, par exemple.

L'acidification réalisée par addition d'acides minéraux ou organiques demande un ajustement d'une extreme précision pour éviter que la fraction 1 protéique ne précipite sous forme amorphe et cet ajustement est d'autant plus délicat qu'il varie en fonction d'un grand nombre de facteurs tels que l'état physiologique du végétal, la variété, la temperature du jus.

l'invention vise un procédé d'extraction des protéines des feuilles de plantes genre Nicotiana comprenant les étapes consistant:

a) à réduire les feuilles en pulpe par exemple en présence de 0 à 2,5 fois le poids de matières vertes d'eau et de 0,5 à 2 parties d'un agent anti-oxydant pour 100 parties de matière végétale.

b) à extraire immédiatement du mélange obtenu le jus vert contenant une partie des protéines insolubles en suspension et des protéines solubles.

c) à faire précipiter les protéines insolubles.

d) à séparer le précipité du liquide.

e) à faire précipiter la fraction I protéique du liquide clarifié résultant de l'étape précédente.

f) à extraire la fraction I protéique ainsi obtenue dans laquelle pour faire précipiter les protéines, on diffuse de l'anhydride carbonique à l'état gazeux dans le jus.

Toutes les especes, genre Nicotiana, mais plus particuliérement Nicotiana tabacum L se prêtent à ce procédé d'extraction

La fraction I protéique (Flp) est localisée essentiellement au niveau des feuilles, mais la présence des tiges peut favoriser l'extraction. Les feuilles seules ou conjointement avec les tiges sont utilisées. Elles peuvent être issues de plantes sénescentes ou de repousses tardives (3ème ou 4ème coupe). Le procédé suivant l'invention permet l'extraction de Flp encore importante avec ce type de plants, ce qui n'est pas le cas des procédés connus jusqu'à présent.

Lesdites parties de la plante sont broyées et réduites en pulpe en présence d'une quantité d'eau comprise entre 0 et 2,5 fois le poids de matière végétale traitée.

Afin d'éviter les réactions parasites (oxydations, formations de complexes qui réduiraient les rendements), on ajoute un anti-oxydant, de préférence le métabisulfite de sodium par pulvérisation au cours du broyage, ou par trempage juste avant broyage à raison de 0,5 à 2 parties d'anti-oxydant pour 100 parties de matière végétale.

On presse immédiatement la masse broyée pour en extraire la portion liquide ou jus vert contenant la majeure partie des protéines du végétal.

L'un des buts de l'invention est d'obtenir un procédé perfectionné de séparation des protéines du jus de pressurage.

Un autre but de l'invention est d'obtenir la précipitation des protéines insolubles du jus de pressurage de manière rapide et sans dépense énergétique importante.

Un autre but de l'invention est d'obtenir la protéine de la fraction I par un procédé simple et rapide sans contamination.

Un autre but de l'invention est d'extraire des protéines de plantes en fin de saison végétative (3ème ou 4ème coupe).

La manière dont ces objectifs, ainsi que d'autres, sont atteints conformément à la présente invention ressort de la description détaillée qui suit.

A cet effet l'invention prévoit, pour séparer les protéines insolubles du jus vert, de diffuser du $CO_2$ gazeux pendant un temps suffisant pour obtenir la coagulation des protéines insolubles sans faire précipiter les protéines de la fraction Ip.

Ce résultat est obtenu de manière variable suivant le produit traité mais de préférence de débit de $CO_2$ sous pression atmosphérique doit être compris entre 10 à 100 ml/min et litre de jus traité et la durée du traitement est inférieure à une heure, de préférence comprise entre 5 et 15 minutes. Ce traitement provoque la precipitation rapide des protéines insolubles sans qu'il soit nécessaire de chauffer le jus. La séparition est alors effectuée de manière connue, par exemple par centrifugation ou filtration sous vide. Le jus clarifié obtenu par ce procédé ou d'autres procédés par ailleurs connus contient les fractions protéiques I et II.

L'invention prévoit encore d'assurer la précipitation de la fraction 1 en diffusant du $CO_2$ gazeux à travers la masse de jus à traiter au moins jusqu'à saturation du jus. Ce traitement conduit de préférence à température ambiante voisine de 20°C provoque en quelques minutes, une précipitation sélective de la Flp sous forme cristallisée ou précristallisée. Selon une modalite de l'invention, la réaction est conduite dans l'obscurité. Le précipité est récupéré par soutirage ou par centrifugation, le liquide contient encore la fraction IIp qui peut être récupérée à son tour selon un procédé connu, par exemple soit par acidification, soit par traitement thermique.

Le rendement d'extraction par le procédé selon l'invention est majoré de 10 à 30% par rapport à ceux des procédés connus. La fraction I protéique obtenue se présente sous une structure pré-cristalline nettement différenciée et le traitement par $CO_2$ ne contamine pas le produit. Le jus traité s'ajuste de lui-même au pH optimum par saturation de la solution en $CO_2$.

D'autres avantages et détails de l'invention sont illustrés par les exemples suivants:

## EXEMPLE 1

Matériel végétal:

## Nicotiana tabacum

variété PB (tabac noir)
variété BB 16 (tabac type Burley)
variété BB 16 sénescente (45 jours aprés 3° coupe)
cultivé à à 250 000 plants/ha, récolté en plantes entières (tiges + feuilles).

## Broyage:

Un lot de 20 kg de tabac est broyé dans un appareil de type LAW (hélice bi-pales + trémie de 2 mm). Au cours de cette opération, une solution de métabisulfite de sodium à 10 g/l est pulvérisée sur le tabac à raison de 0,5 1 par kg de tabac.

## Pressurage:

La "bouillie" obtenue est immédiatement transférée dans une presse à plateaux et soumise à une pression de 10 kg/cm² (une presse à bande ou à vis pourrait également être utilisée).

3

Les caractéristiques du tabac avant broyage du "jus vert" et du "tourteau" sont rassemblées dans le tableau ci-après. (Voir tableau page 11).

**Traitement du jus vert:**

La coagulation thermique des "protéines vertes" est réalisée à t° = 50°C + 2°C par passage du "jus vert" dans un serpentin immergé dans un bain-marie à 75°C. Grâce à ce procédé, la température s'élève rapidement (en 1 min environ) à 50°C; elle est ensuite maintenue à ce niveau, pendant 10 min, à l'aide d'un deuxième bain-marie stabilisé à 50°C.

Le jus est alors refroidi rapidement (1 min) jusqu'à 20°C par passage dans un serpentin plongé dans une cuve à eau réfrigérée.

La clarification du jus ainsi traité est réalisée par filtration sous vide à l'aide de fioles à vide de 5 l équipées de filtres de type Büchner. Les filtres Büchner (Ø = 24 cm) sont garnis au préalable d'une feuille de papier filtre (PRAT et DUMAS), réf. 202 IFS) sur laquelle est déposée une couche d'environ 0,5 cm de perlite ou dicalite (adjuvant de filtration). La clarification ainsi obtenue ne peut être parfaite que dans la mesure où de la perlite (ou dicalite) est mélangée, avant filtration au jus à clarifier (10 g/l).

Si un tel montage convient bien pour le traitement de quelques dizaines de litres de jus, il doit cependant être remplacé par un filtre rotatif à tambour, sous vide, dans le cas où des quantités plus importantes de jus sont à traiter.

La clarification du jus peut également être obtenue par centrifugation à haute vitesse (> 10 000 g), difficile à réaliser sur de grandes quantités.

**Traitement du jus clarifie:**

Le jus clarifié est divisé en 3 fractions aliquotes de 5 l chacune.

La première fraction (A) est conservée telle quelle à 25°C, à l'obscurite.

La seconde fraction (B) est traitée par le $CO_2$ gazeux pendant 15 min (débit du $CO_2$:50 ml/min), à l'aide d'un diffuseur placé dans le fond d'un récipient et relié à une bouteille de gaz $CO_2$ (38 kg) par l'intermédiaire d'un détendeur.

La troisième fraction (C) est acidifiée avec HCl (2N) jusqu'à obtenir le pH atteint dans la fraction (B) après traitement par le $CO_2$.

Après précipitation de la Flp (quasi immédiate dans le cas des fractions (B) et (C), les dépôts cristallins sont récupérés par soutirage et/ou centrifugation à 2000 g puis lyophilisés.

Les résultats sont rassemblés dans le tableau ci-après. Voir tableau page 12).

Cet exemple démontre la supériorité du traitement par le gaz $CO_2$ sur les traitements témoins (A) et (C) (trés forte augmentation des rendements d'extraction, rapidité de la cristallisation) et sur les traitements par acidification (simplicité de mise en oeuvre, pureté de la fraction 1 protéique précipitée).

**EXEMPLE II**

A partir de plants de tabac juvéniles (variété BB 16), le protocole expérimental de l'exemple 1 a été conservé jusqu'au traitement du jus clarifié par le gaz $CO_2$.

La variante apportée dans cet exemple est la durée du traitement par le $CO_2$: le jus clarifié a en effet été divisé en 5 parties égales et "gazéifié" pendant 15 min, 1 h, 2 h ou 4 h.

Les rendements en Flp correspondants sont reportés dans le tableau ci-après:

| Durée du traitement au $CO_2$ | pH | FIp cristallisée (g/kg tabac frais) |
|---|---|---|
| Témoin (non traité) | 6,0 | 1,66 |
| 15 min | 5,70 | 3,21 |
| 1 h. | 5,60 | 3,66 |
| 2 h. | 5,60 | 3,57 |
| 4 h. | 5,60 | 3,61 |

Une durée de traitement supérieure à 15 min augmente relativement peu le rendement d'extraction, elle peut néanmoins se justifier pour certains tabacs qui se prêtent mal à l'extraction de la FIp (tabacs sénescents, certaines variétés....).

**EXEMPLE III**

Des plants de tabac de la variété BB 16, récoltés au stade juvenile (35 jours), sont traités selon le protocole de l'exemple 1 jusqu'à l'obtention du "jus vert".

Les protéines vertes sont alors précipitées non pas par la chaleur, comme dans l'exemple 1, mais par "gazéification" du "jus vert" par le $CO_2$. La floculation des protéines vertes est obtenue après 15 min de traitement à température ambiante (débit de $CO_2$: 25 ml/min/l jus).

La récupération des protéines solubles (FIp + FIIp) est effectuée de la même manière que dans l'exemple 1 (filtration sous vide ou centrifugation).

La cristallisation de la FIp peut alors être réalisée soit en laissant décanter le jus clarifié tel quel, soit en traitant à nouveau le jus par le $CO_2$ selon une des modalités des exemples 1 et 2.

Les résultats obtenus sont rassemblés dans le tableau ciaprès. (Voir tableau page 13).

Cet exemple souligne l'intérêt d'un traitement au $CO_2$ sur "jus vert". En effet, la phase de chauffage à 50°C est dans ce cas "court-circuitée" ce qui entraine une simplification supplémentaire de la technique d'extraction et surtout une économie d'énergie non négligeable. Ce procédé comporte toutefois le risque de précipiter une partie des protéines solubles avec les protéines "vertes" si la durée du traitement par $CO_2$ est mal contrôlée.

| | | Volume (1) | poids (kg) | pH | Azote total (%n.s.tabac avant broya-ge) | FIp-FIIp (%n.s.tabac avant broya-ge) |
|---|---|---|---|---|---|---|
| | - Variété PB | - | 20 | - | 3,9 | 8,7 |
| TABAC | - " BB 16 | - | 20 | - | 4,9 | 10,2 |
| AVANT | - " BB 16 | - | 20 | - | 4,4 | 6,7 |
| BROYAGE | sénescente | | | | | |
| | - Variété PB | 21,0 | 21,5 | 5,9 | 2,4 | 6,3 |
| "JUS VERT" | - " BB 16 | 21,5 | 22,0 | 6,0 | 3,0 | 8,0 |
| | - " BB 16 | 20,5 | 21,5 | 6,1 | 2,7 | 5,3 |
| | sénescente | | | | | |
| | - Variété PB | - | 8,5 | - | 1,5 | 2,4 |
| "TOURTEAU | - " BB 16 | - | 8,0 | - | 1,9 | 2,2 |
| | - " BB 16 | - | 8,5 | - | 1,7 | 1,4 |
| | sénescente | | | | | |

0 117 189

| | pH JUS CLARIFIE avant traite-ment | : après traite-ment | Durée de la cristalli-sation | FIp cristal-lisée (g/kg tabac vert) | Teneur en % de la FIp précipitée (% n.s.) |
|---|---|---|---|---|---|
| Fraction A | 5,9 | 5,9 | 48 h | 1,5 | 15,1 |
| Variété " B | 5,9 | 5,5 | qq min | 3,2 | 15,2 |
| PB " C | 5,9 | 5,5 | qq min | 2,9 | 14,8 |
| Fraction A | 5,8 | 5,8 | 24 h | 2,0 | 15,8 |
| Variété " B | 5,8 | 5,4 | qq min | 4,1 | 15,7 |
| BB 16 " C | 5,8 | 5,4 | qq min | 3,7 | 14,2 |
| Fraction A | 6,2 | 6,2 | - | o | - |
| Variété " B | 6,2 | 5,7 | qq min | 1,8 | 15,9 |
| BB 16 " C | 6,2 | 5,7 | qq min | 1,5 | 14,3 |
| sénescente | | | | | |

| Traitement du "jus vert" | Traitement du "jus clarifié" | pH après traitement | FIp cristallisée (g/kg tabac frais) |
|---|---|---|---|
| chauffage à 50°C (10 min) | témoin | 6,1 | 1,90 |
|  | $CO_2$ (15 min) | 5,6 | 3,95 |
| diffusion $CO_2$ (15 min) | témoin | 5,9 | 1,50 |
|  | $CO_2$ (15 min) | 5,5 | 2,75 |

## Revendications

1.- Procédé d'extraction des protéines des feuilles de plantes, plus particulièrement du genre <u>Nicotiana</u> selon lequel:

a) on réduit les feuilles en pulpe en présence de 0 à 2,5 fois le poids de matières vertes d'eau et de 0,5 à 2 parties d'un agent anti-oxydant pour 100 parties de matière végétale,

b) on extrait immédiatement du mélange obtenu le liquide, ou jus vert, contenant la majeure partie des protéines insolubles en suspension et des protéines solubles,

c) on fait précipiter les protéines insolubles,

d) on sépare le précipité du liquide pour clarifier ce liquide contenant une fraction I et une fraction II protéiques,

e) on fait précipiter la fraction I protéique du liquide clarifié résultant de l'étape précédente, et

f) on extrait la fraction I protéique ainsi obtenue, procédé caractérisé par le fait que, pour faire précipiter la fraction I protéique, on diffuse de l'anhydride carbonique (CO2) à l'état gazeux dans le liquide clarifié au moins jusqu'à saturation du liquide en CO2.

2.- Procédé selon la revendication 1, dans lequel la precipitation des protéines insolubles est obtenue par chauffage du liquide à 50°C ± 2°C pendant 10 à 30 min et refroidissement à 20°C.

3.- Procédé selon la revencication 1 ou 2, dans lequel la plante est du genre Nicotiana tabacum L.

4.- Procédé selon l'une des revendications 1 à 3, dans lequel à l'étape c), on précipite les protéines insolubles par diffusion d'anhydride carbonique (CO2) à l'état gazeux dans le liquide pendant un temps suffisant sans entrainer la précipitation de la fraction I protéique.

5.- Procédé selon l'une des revendications 1 à 4, dans lequel la température du liquide clarifié est voisine de 20°C.

6.- Procédé selon l'une des revendications 1 à 5, dans lequel l'étape d) est réalisée dans l'obscurité.

7.- Procédé selon l'une des revendications 1 à 6, dans lequel les feuilles et les tiges des plantes sont réduites en pulpe.

8.- Procédé selon l'une des revendications 1 à 7, dans lequel l'agent anti-oxydant est du métabisulfite de sodium.

## Patentansprüche

1. Verfahren zur Extraktion von Proteinen aus Pflanzenblättern, insbesondere des Genus <u>Nicotiana</u>, bei dem man

a) die Blätter, bezogen auf das Gewicht der Grünsubstanz, in Gegenwart der 0- bis 2,5-fachen Mengen Wasser und von 0,5 bia 2 Teilen eines Antioxidationsmittels auf 100 Teile Pflanzensubstanz zu einer Pulpe zerkleinert,

b) unmittelbar aus dem erhaltenen Gemisch die Flüssigkeit oder den Grünsaft extrahiert, die bzw. der den größten Teil der in Suapension befindlichen unlöslichen Proteine und der löslichen Proteine enthält,

c) die unlöslichen Proteine sich niederschlagen läßt,

d) den Niederschlag von der Flüssigkeit trennt, um diese Flüssigkeit, die eine Proteinfraktion I und eine Proteinfraktion II enthält, zu reinigen,

e) die Proteinfraktion I aus der aus der vorangegangenen Stufe resultierenden Flüssigkeit ausfällt, und

f) die auf diese Weise erhaltene Proteinfraktion extrahiert,

dadurch gekennzeichnet, daß man zum Ausfällen der Proteinfraktion I Kohlensäureanhydrid (CO2) in gasförmigem Zustand mindestens bis zur Sättigung der Flüssigkeit mit CO2 in die gereinigte Flüssigkeit einbläst.

2. Verfahren nach Anspruch I, bei dem der Niederschlag der unlöslichen Proteine dadurch erhalten wird, daß man die Flüssigkeit 10 bis 3+ Minuten auf 50 °C ± 2 °C erwärmt und dann auf 20 °C abkühlt

5. Verfahren nach Anspruch 1 oder 2, bei dem die Pflanze vom Genus Nicotiana tabacum L ist.

4. Verfahren nach einem der Ansprüche 1 bis 3, bei dem man die unlöslichen Proteine durch ausreichend langes Einblasen von gasförmigem Kohlensäureanhydrid (CO2) ausfällt, ohne damit ein Ausfällen der Proteinfraktion I zu bewirken.

5. Verfahren nach einem der Ansprüche 1 bis 4, bei dem die Temperstur der gereinigten Flüssigkeit in der Nähe von 20 °C liegt.

6. Verfahren nach einem der Ansprüche 1 bis 5, bei dem die Stufe (d) in Dunkelheit durchgeführt wird.

7. Verfahren nach einem der Ansprüche 1 bis 6, bei dem die Pflanzenblätter und die Pflanzenstengel zu einer Pulpe zerkleinert werden.

8. Verfahren nach einem der Ansprüche 1 bis 7, bei dem das Antioxydationsmittel Natriummetabisulfit ist.

## Claims

1. A method of extracting proteins from the leaves of plants, more particularly of the genus Nicotiana in which:

a) the leaves are reduced to pulp in the presence of 0 to 2.5 times the weight of green material of water and 0.5 to 2 parts of an anti-oxydant for 100 parts of plant material,

b) the liquid, or green juice, containing the major part of the insoluble proteins in suspension and the soluble proteins is immediately extracted from the mixture obtained,

c) the insoluble proteins are precipitated,

d) the precipitate is separated from the liquid for clarifying this liquid containing a protein fraction I and a protein fraction II,

e) the protein fraction I of the clarified liquid resulting from the preceding step is precipitated, and

f) the protein fraction I thus obtained is extracted, which method is characterized by the fact that, for precipitating the protein fraction I, carbon anhydride in the gaseous state (CO) is diffused in the clarified liquid at least until saturation of the liquid with $CO_2$.

2. Method according to claim 1 wherein precipitation of the insoluble proteins is obtained by heating the liquid to 50°C $\pm$ 2°C for 10 to 30 minutes and cooling to 20°C.

3. Method according to claim 1 or 2 wherein the plant is of the Nicotiana tabacum L genus.

4. Method according to one of claims 1 to 3, wherein in step c) the insoluble proteins are precipitated by diffusion in the liquid of carbon anhydride $(CO_2)$ in the gaseous state for a sufficient time without causing precipitation of the protein fraction I.

5. Method according to one of claims 1 to 4, wherein the temperature of the clarifying liquid is close 20°C.

6. Method according to one of claims 1 to 5, wherein step-d) is carried out in darkness.

7. Method according to one of claims 1 to 6, wherein the leaves and the stems of the plants are reduced to pulp.

8. Method according to one of claims 1 to 7, wherein the anti-oxydant is sodium metabisulfite.